# EUROPÄISCHE PATENTSCHRIFT

(11) **EP 3 996 963 B1**
(45) Veröffentlichungstag und Bekanntmachung des Hinweises auf die Patenterteilung: **29.03.2023**
(21) Anmeldenummer: 20723813.0
(22) Anmeldetag: 28.04.2020
(51) Int. Cl.: B60T 13/66, B60T 8/36

(54) **SENSORANORDNUNG UND VERFAHREN ZUM FÜGEN EINER SOLCHEN SENSORANORDNUNG**
SENSOR ARRANGEMENT AND METHOD FOR JOINING A SENSOR ARRANGEMENT OF THIS KIND
ENSEMBLE CAPTEUR ET PROCÉDÉ POUR ASSEMBLER UN TEL ENSEMBLE CAPTEUR

(30) Priorität: 09.07.2019 DE 102019210065
(43) Veröffentlichungstag der Anmeldung: 18.05.2022
(73) Patentinhaber: Robert Bosch GmbH, 70442 Stuttgart (DE)
(72) Erfinder: JOERG, Martin, 87497 Wertach (DE); HOFMANN, Dietmar, 87544 Blaichach (DE); BIGL, Peter, 87538 Fischen (DE)
(86) Internationale Anmeldenummer: PCT/EP2020/061698
(87) Internationale Veröffentlichungsnummer: WO 2021/004669

(56) Entgegenhaltungen:
- EP-A2- 1 562 030
- DE-A1-102016 211 422
- DE-A1-102017 218 648
- JP-A- 2013 071 491

## Beschreibung

Die Erfindung betrifft eine Sensoranordnung zur Erfassung einer Bewegung eines innerhalb eines ersten Gehäuses beweglich gelagerten Körpers sowie ein Verfahren zum Fügen einer solchen Sensoranordnung. Gegenstand der vorliegenden Erfindung ist auch ein ESP-System (ESP: Elektronisches Stabilitätsprogramm) für ein Fahrzeug mit einer solchen Sensoranordnung.

Bei einem verbesserten ESP-System soll anstelle eines einfachen Gleichstrommotors ein bürstenloser Gleichstrommotor eingesetzt werden, der auch als bürstenloser EC-Motor (Electronically Commutated Motor) bezeichnet wird. Dieser erreicht bei richtiger Ansteuerung höhere Drehzahlen, sodass der Bremsdruck im Fahrzeug schneller aufgebaut werden kann, was im Endeffekt zu einem Verkürzen des Bremsweges führt. Um den Motor zum richtigen Zeitpunkt anzusteuern, wird eine Sensoranordnung eingesetzt, welche die momentane Drehposition des Motors erkennt und diese Position an ein Steuergerät weitergibt. Hierzu wird beispielsweise an einem freien Ende einer Motorwelle ein als Permanentmagnet ausgeführter Messwertgeber hochgenau positioniert und dauerhaft fixiert, dessen Feldlinien einen Messwertaufnehmer einer auf ein Pumpengehäuse montierten Messvorrichtung durchlaufen. Die Messvorrichtung umfasst ein Kunststoffgehäuse und ein Sensorelement, welches beispielsweise auf dem TMR-Effekt (magnetoresistiver Tunneleffekt) basiert und die Winkel der Magnetfeldlinien detektiert. Um diese magnetischen Feldlinien möglichst genau erfassen zu können, sollte der Messwertaufnehmer bzw. die komplette Messvorrichtung sehr genau zum Messwertgeber auf der Motorwelle bzw. zur Motorbohrung des Pumpengehäuses positioniert werden. Zudem sollte die Motorbohrung, welche durch den Betrieb des Systems Bremsflüssigkeits-Leckage aufweisen kann, dauerhaft dagegen verschlossen und abgedichtet werden.

Aus der DE 10 2015 201 411 A1 ist ein Motor-Pumpen-Aggregat für ein Bremssystem, mit einem Elektromotor bekannt, welcher eine Motorwelle aufweist. Die Motorwelle treibt mindestens eine in einem Pumpengehäuse angeordnete Fluidpumpe an. Hierbei ist ein Steuergerät am Pumpengehäuse angeordnet und stellt eine aktuelle Drehzahl und/oder ein aktuelles Drehmoment des Elektromotors ein, wobei das Steuergerät über eine Sensoranordnung, welche einen magnetischen Messwertgeber und einen Messwertaufnehmer umfasst, einen aktuellen Drehwinkel der Motorwelle berührungslos erfasst und zur Ansteuerung des Elektromotors auswertet. Der Messwertgeber ist an einem freien Ende der Motorwelle innerhalb des Pumpengehäuses angeordnet und beeinflusst in Abhängigkeit von der Drehbewegung der Motorwelle mindestens eine magnetische Größe eines von dem magnetischen Messwertaufnehmer erfassten Magnetfelds, welcher ortsfest im Steuergerät bzw. Sensor angeordnet ist.

Aus der DE 10 2016 207 659 A1 ist eine Aktuatoreinrichtung für ein Fahrzeug, insbesondere für ein Bremssystem eines Kraftfahrzeugs, mit wenigstens einem elektronisch kommutierten Elektromotor, der einen auf einer drehbar gelagerten Welle drehfest angeordneten Rotor aufweist, und mit wenigstens einem Drehwinkelsensor zum Erfassen einer Drehstellung des Rotors bekannt. Hierbei ist der Drehwinkelsensor gegenüberliegend zu einer Stirnseite der Welle angeordnet. Zudem weist das Ende bzw. die Stirnseite der Welle wenigstens einen Drehwinkelgeber auf. Bei dem Drehwinkelgeber kann es sich beispielsweise um einen Permanentmagneten handeln, der fest mit der Welle verbunden ist, und sich somit mit dieser mitdreht. Der Drehwinkelsensor erfasst dann das magnetische Feld des Drehwinkelgebers, wobei in Abhängigkeit des erfassten magnetischen Feldes die Drehwinkelstellung der Welle und damit die des Rotors erfasst bzw. bestimmt wird.

Aus der DE 10 2017 218648 A1 ist darüber hinaus eine Sensoranordnung zur berührungslosen Erfassung einer Bewegung eines innerhalb eines ersten Gehäuses beweglich gelagerten Körpers nach den Merkmalen des Oberbegriffs des Anspruchs 1 bekannt.

Schließlich offenbart die EP 1 562 030 A2 ein Verfahren zum Fügen einer Sensoranordnung mit Verbindungsadapter mit einem ersten Gehäuse mit Öffnung gemäß dem Oberbegriff des nebengeordneten Anspruch 21.

### Offenbarung der Erfindung

Die Sensoranordnung mit den Merkmalen des unabhängigen Patentanspruchs 1 bzw. das ESP-System für ein Fahrzeug mit den Merkmalen des Patentanspruchs 20 haben jeweils den Vorteil, dass ein Verbindungsadapter eine Schnittstelle zwischen einer Messvorrichtung und einem ersten Gehäuse ausbildet, in welchem ein Körper, dessen Bewegung erfasst und ausgewertet werden soll, beweglich gelagert ist. Über diesen als kostengünstiges Einzelbauteil hergestellten Verbindungsadapter und kostengünstiges und bereits bekanntes Silikon kann die Messvorrichtung einfach am ersten Gehäuse fixiert werden und die Öffnung im ersten Gehäuse abdichten.

Ausführungsformen der vorliegenden Erfindung stellen eine Sensoranordnung zur berührungslosen Erfassung einer Bewegung eines innerhalb eines ersten Gehäuses beweglich gelagerten Körpers, mit einem Messwertgeber, welcher drehfest mit dem Körper verbunden ist und sich mit dem Körper mitbewegt, und einer ortsfest angeordneten Messvorrichtung zur Verfügung, welche einen Messwertaufnehmer umfasst. Hierbei beeinflusst der Messwertgeber in Abhängigkeit von der Bewegung des Körpers mindestens eine von dem Messwertaufnehmer erfasste physikalischen Größe. Die Messvorrichtung ist über einen Verbindungsadapter mit dem ersten Gehäuse verbunden. Der Verbindungsadapter weist an einer dem ersten Gehäuse zugewandten Seite eine umlaufende Aufnahmekontur auf, in welche eine Silikonraupe eingebracht und zwischen der Aufnahmekontur und dem ersten Gehäuse verpresst ist, wobei die verpresste Silikonraupe den Verbindungsadapter am ersten Gehäuse fixiert und abdichtet.

Vorzugsweise kann der Verbindungsadapter als Kunststoffspritzteil ausgeführt werden. Dies ermöglicht eine besonders kostengünstige Realisierung des Verbindungsadapters. Zudem besteht durch einen solchen Verbindungsadapter in vorteilhafter Weise keine Gefahr eines magnetischen Kurzschlusses zwischen einem Permanentmagneten auf dem bewegten Körper und dem Messwertaufnehmer.

Zudem wird ein ESP-System für ein Fahrzeug, mit einem Elektromotor zum Antreiben von mindestens einem Druckerzeuger und einer solchen Sensoranordnung vorgeschlagen, welche eine momentane Drehposition und/oder Drehgeschwindigkeit einer Welle des Elektromotors ermittelt.

Des Weiteren wird ein Verfahren zum Fügen einer solchen Sensoranordnung vorgeschlagen, welches die nachfolgenden Schritte umfasst: Bereitstellen des ersten Gehäuses mit einer Öffnung, in welcher der Körper mit dem Messwertgeber beweglich gelagert ist. Bereitstellen der mit dem Verbindungsadapter verbundenen Messvorrichtung. Einbringen der Silikonraupe in die umlaufende Aufnahmekontur des Verbindungsadapters. Einführen eines Tubus des Verbindungsadapters in die Öffnung des ersten Gehäuses, so dass die Silikonraupe während des Einführvorgangs in der umlaufenden Aufnahmekontur verdrängt wird und den Verbindungsadapter am ersten Gehäuse fixiert und die Öffnung des ersten Gehäuses abdichtet.

Unter einer Messvorrichtung wird nachfolgend eine Baugruppe mit einem Messwertaufnehmer verstanden, welcher vorzugsweise auf dem TMR-Effekt (magnetoresistiver Tunneleffekt) basiert. Selbstverständlich können auch Messwertaufnehmer eingesetzt werden, welche auf einem anderen magnetoresistiven Effekt, wie beispielsweise dem AMR-Effekt (Anisotroper magnetoresistiver Effekt), GMR-Effekt (Riesenmagnetowiderstandseffekt), CMR-Effekt (kolossaler magnetoresistiver Effekt) usw. basieren. Zudem kann nicht nur der magnetoresistive Effekt, sondern auch beispielsweise der Hall-Effekt eingesetzt werden, um die Bewegung eines Körpers zu erfassen. Zur Umsetzung des Halleffekts kann beispielsweise eine Stahlscheibe statt eines Permanentmagneten als Messwertgeber verwendet werden, deren Bewegung mindestens eine von Hallelementen erfasste physikalische Größe beeinflusst.

Durch die in den abhängigen Ansprüchen aufgeführten Maßnahmen und Weiterbildungen sind vorteilhafte Verbesserungen der im unabhängigen Patentanspruch 1 angegebenen Sensoranordnung und des im unabhängigen Patentanspruch 21 angegebenen Verfahrens zum Fügen einer solchen Sensoranordnung möglich.

Besonders vorteilhaft ist, dass der Verbindungsadapter an der dem ersten Gehäuse zugewandten Seite einen Tubus aufweisen kann, welcher in eine korrespondierende Öffnung im ersten Gehäuse eingeführt werden kann, in welcher der mit dem bewegten Körper verbundene Messwertgeber angeordnet ist. Durch den Tubus kann der Verbindungsadapter einfach und schnell mit dem ersten Gehäuse gefügt werden.

In weiterer vorteilhafter Ausgestaltung der Sensoranordnung kann die umlaufende Aufnahmekontur rotationssymmetrisch mit einem geschwungenen offenen Querschnitt am äußeren Rand des Tubus ausgebildet werden, welcher von einer Oberfläche des ersten Gehäuses begrenzt ist. Hierbei dichtet die in der Aufnahmekontur verpresste Silikonraupe den Verbindungsadapter und die Öffnung im ersten Gehäuse ab. Die Aufnahmekontur weist zur Applikation von Silikon an der dem ersten Gehäuse zugewandten Seite bzw. der Unterseite des Verbindungsadapters vorzugsweise eine Geometrie auf, welche einer optimalen Form für den Silikonauftrag und der anschließenden Silikonverdrängung während der Montage der Messvorrichtung auf dem ersten Gehäuse entspricht. Die rotationssymmetrische Gestaltung der Aufnahmekontur ermöglicht ein einfaches und kostengünstiges Applizieren der Silikonraupe, da ein Silikondispenser, welcher die Silikonraupe ausgibt, stillsteht und die Messvorrichtung mit dem Verbindungsadapter unter dem Dispenser rotiert. Zudem bietet die geschwungene offene Aufnahmekontur eine größere benetzbare Fläche als beispielsweise eine plane Kontur. Die offene Gestaltung der Aufnahmekontur erlaubt eine leichte, kostengünstige und gleichzeitig präzise Applikation des Silikons. Außerdem wird eine vollautomatische und optische Kontrolle der aufgebrachten Silikonraupe, beispielsweise hinsichtlich Menge, Form, Fehlstellen usw. ermöglicht. Da eine korrespondierende Oberfläche des ersten Gehäuses die offene Aufnahmekontur nach unten begrenzt ergibt sich beim Fügen der Bauteile in vorteilhafter Weise eine horizontale Verdrängung des Silikons über die Oberfläche des ersten Gehäuses. Damit kann eine Kontamination der Öffnung im ersten Gehäuse und eines darin angeordneten Motorlagers mit Silikon vermieden werden. Die Aufbringung des Silikons auf der Messvorrichtung bzw. dem Verbindungsadapter und nicht auf dem ersten Gehäuse verringert die Ausschusskosten bei fehlerhaft aufgetragenem Silikon. Durch die Applikation des Silikons auf den Verbindungsadapter und nicht auf das erste Gehäuse ist kein "Abstreifen bzw. Verschleppen" des Silikons durch den Tubus am Verbindungsadapter in die Öffnung möglich.

In weiterer vorteilhafter Ausgestaltung der Sensoranordnung kann das erste Gehäuse eine umlaufende Ringnut aufweisen, welche die Aufnahmekontur am Verbindungsadapter zumindest teilweise überlappt. Durch die umlaufende Ringnut ergibt sich eine Vergrößerung der benetzten Oberfläche des ersten Gehäuses. Zudem kann ein Austritt des Silikons über die Außengeometrie des Verbindungsadapters unterbunden werden. Hierbei wird eine scharfe Kante am Übergang der Ringnut zur planen Oberfläche des ersten Gehäuses durch einen konkaven bzw. abgerundeten Übergang vermieden. Dadurch kann ein "Reinschwappen" des Silikons bei dessen Verdrängung vermieden werden, so dass durch den konkaven bzw. abgerundeten Übergang eine Verdrängung des Silikons ohne Lufteinschlüsse erreicht werden kann. Die Größe der Ringnut kann so gewählt werden, dass zuvor nach außen verdrängtes Silikonvolumen sicher in der Ringnut aufgenommen werden kann. Somit kann ein Benetzen der umliegenden Bauteile mit Silikon vermieden werden.

In weiterer vorteilhafter Ausgestaltung der Sensoranordnung kann die Aufnahmekontur zur Aufnahme der Silikonraupe im Verbindungsadapter beispielsweise einen Aufnahmeraum mit einem ersten Radius aufweisen, welcher größer als ein Querschnitt der Silikonraupe ist. Dies ermöglicht die Aufnahme der Silikonraupe im Aufnahmeraum ohne Lufteinschlüsse. Zudem kann die Aufnahmekontur zur Aufnahme eines Teils der verpressten Silikonraupe einen Verdrängungsraum mit einem zweiten Radius aufweisen, welcher kleiner als der erste Radius des Aufnahmeraums ist. Zwischen dem Aufnahmeraum und dem Verdrängungsraum kann die Aufnahmekontur einen tangentialen und stetig abfallenden Verlauf mit einer in Bezug auf den Aufnahmeraum und den Verdrängungsraum entgegengesetzten Krümmung und einem dritten Radius aufweisen. Vorzugsweise kann der dritte Radius dem ersten Radius entsprechen. Des Weiteren kann die Aufnahmekontur an einem dem Aufnahmeraum abgewandten Rand des Verdrängungsraums einen Auslauf aufweisen. Hierbei kann die umlaufende Ringnut im ersten Gehäuse die Aufnahmekontur am Verbindungsadapter zumindest im Bereich des Verdrängungsraums überlappen, um Teile des verdrängten Silikons aufzunehmen. Die Ausgestaltung einer solchen Aufnahmekontur in einem Kunststoffspritzverfahren ist in einem einfachen Auf-/Zu-Werkzeug ohne Schieber möglich. Hierbei kann der kleinere zweite Radius des Verdrängungsraums der Aufnahmekontur ungefähr der Hälfte des ersten Radius entsprechen. Dies ermöglicht einen Toleranzausgleich der aufgetragenen Silikonmenge. Durch den tangentialen und stetig abfallenden Verlauf zwischen dem Aufnahmeraum und dem Verdrängungsraum ergibt sich eine gleichmäßige, durchgehende Benetzung der Aufnahmekontur ohne Lufteinschlüsse. Im Gegensatz dazu würde ein ansteigender Verlauf beispielsweise Lufteinschlüsse begünstigen. Der Auslauf kann beispielsweise durch einen durch Auflagebereiche am Verbindungsadapter relativ zum ersten Gehäuse erzeugten Spalt gebildet werden und ermöglicht einen zusätzlichen Toleranzausgleich und eine Entlüftung während des Montagevorgangs. Zudem ergibt sich durch die Entlüftung eine geringstmögliche Prozesszeit, da keine "Wartezeit" für den Druckabbau benötigt wird. Des Weiteren können zur Vermeidung von Lufteinschlüssen alle Übergänge ohne Hinterschnitte bzw. ansteigende Bereiche ausgeführt werden.

In weiterer vorteilhafter Ausgestaltung der Sensoranordnung kann der Messwertgeber einen Permanentmagneten umfassen, und der Messwertaufnehmer kann mindestens eine magnetische Größe eines Magnetfelds des Permanentmagneten erfassen, welches von der Bewegung des Körpers beeinflusst ist. Hierbei kann der Permanentmagnet beispielsweise in Form eines kunststoffgebundenen permanentmagnetischen Materials als Verlängerung an den Körper angespritzt werden, so dass ein freies Ende des Körpers den Permanentmagneten ausbildet. Alternativ kann der Permanentmagnet mittels warm aushärtendem Klebstoff in einem Haltebecher verklebt werden, welcher über mindestens einen Presszapfen in entsprechende Bohrungen im Körper eingepresst dauerhaft befestigt werden kann. Der bewegte Körper kann beispielsweise als drehbeweglich gelagerte Welle oder als translatorisch beweglich gelagerte Stange ausgeführt werden. Hierbei kann bei dem als Welle ausgeführten Körper die Beeinflussung des von dem Messwertaufnehmer erfassten Magnetfelds ausgewertet werden, um einen aktuellen Drehwinkel und/oder eine aktuelle Drehgeschwindigkeit der Welle zu berechnen. Bei dem als Stange ausgeführten Körper kann die Beeinflussung des von dem Messwertaufnehmer erfassten Magnetfelds ausgewertet werden, um eine aktuell zurückgelegte Strecke und/oder eine aktuelle Verschiebegeschwindigkeit der Stange zu berechnen.

In weiterer vorteilhafter Ausgestaltung der Sensoranordnung kann mindestens eine in axialer Richtung verlaufende Einpressrippe an einer Außenwand des Tubus ausgebildet werden, über welche der Tubus in die Öffnung eingepresst und vorfixiert werden kann. Um das Einführen des Tubus in die Öffnung zu erleichtern kann am Ende der mindestens einen Einpressrippe eine Einführschräge ausgebildet sein. Zusätzlich kann am Rand der Öffnung eine Einführfase ausgebildet werden. Vorzugsweise können mehrere Einpressrippen verteilt an der Außenwand des Tubus angeordnet werden und den Tubus in der Öffnung im ersten Gehäuse zentrieren. Dadurch kann die Messvorrichtung bzw. der Messwertaufnehmer in Richtung Öffnung im ersten Gehäuse ausgerichtet und optimal positioniert werden. Durch die Einpressrippen wird die Messvorrichtung bzw. der Messwertaufnehmer bis zum vollständigen Aushärten der Silikonraupe fixiert und positioniert. Im späteren Betrieb, wenn die Überpressung unter Hochtemperatur relaxiert ist, kann die verpresste und ausgehärtete Silikonraupe die alleinige Fixierung der Messvorrichtung, sowie die generelle Abdichtung gegenüber Flüssigkeit der Öffnung im ersten Gehäuse übernehmen. Zudem ergeben sich durch die Einpressrippen entsprechende Spalte zum Entlüften, welche beim Einpressen der Messvorrichtung bzw. des Verbindungsadapters in die Öffnung im ersten Gehäuse nützlich sind. Durch die Entlüftung ergibt sich eine geringstmögliche Prozesszeit, da keine "Wartezeit" für den Druckabbau entsteht. Die Einpressrippen ermöglichen die Zentrierung und temporäre Befestigung der Messvorrichtung ohne Hinterschnitte am Verbindungsadapter und/oder in der Öffnung des ersten Gehäuses. Daher ist die Herstellung des Verbindungsadapters als Kunststoffspritzteil durch einfaches Auf-/Zu-Werkzeug ohne Schieber möglich.

In weiterer vorteilhafter Ausgestaltung der Sensoranordnung kann der Verbindungsadapter am Außenumfang mindestens eine Einbuchtung zum Ansetzen eines Positionierungs- und/oder Greifwerkzeugs aufweisen. Vorzugsweise weist der Verbindungsadapter zwei V-förmige Einbuchtungen auf, welche einander gegenüberliegend am Außenumfang ausgebildet sind. Dies ermöglicht ein wiederholtes und präzises Greifen des Verbindungsadapters während diverser Fertigungsschritte und ein hochgenaues rotatorisches Positionieren der Messvorrichtung in der Öffnung des ersten Gehäuses bei der Endmontage.

In weiterer vorteilhafter Ausgestaltung der Sensoranordnung kann der Verbindungsadapter an einer der Messvorrichtung zugewandten Stirnseite mehrere Stützflächen zum Ansetzen eines Einpresswerkzeugs und an der dem ersten Gehäuse zugewandten Stirnseite mehrere Auflagebereiche aufweisen, an welchen der Verbindungsadapter an dem ersten Gehäuse aufliegen kann. Hierbei können die Stützflächen und die Auflagebereiche einander gegenüberliegend angeordnet werden.

In weiterer vorteilhafter Ausgestaltung der Sensoranordnung kann ein Abschirmblech über ein zweites Gehäuse der Messvorrichtung geschoben werden und das zweite Gehäuse umschließen. Dadurch kann die Sensorelektronik gegen elektromagnetische Störfelder rund um die Messvorrichtung abgeschirmt werden. Dadurch kann eine Verfälschung der erfassten magnetischen Größe zumindest erschwert oder vermieden werden.

In weiterer vorteilhafter Ausgestaltung der Sensoranordnung kann der Messwertaufnehmer auf einer Leiterplatte positioniert und befestigt werden. Hierbei kann der Verbindungsadapter beispielsweise an einer der Messvorrichtung zugewandten Seite mindestens einen Presszapfen aufweisen, welcher in eine korrespondierende Öffnung der Leiterplatte eingepresst werden kann. Vorzugsweise können mehrere Presszapfen verteilt am Verbindungsadapter ausgebildet werden, welche die Leiterplatte mit dem Messwertaufnehmer bezogen auf die Öffnung im ersten Gehäuse positionieren und zentrieren. Dadurch kann die Leiterplatte samt Messwertaufnehmer in axialer und radialer Richtung hochpräzise in der Messvorrichtung aufgenommen und der Messwertaufnehmer in Richtung erstes Gehäuse optimal positioniert werden.

In weiterer vorteilhafter Ausgestaltung der Sensoranordnung können das Abschirmblech, das zweite Gehäuse, die Leiterplatte und der mindestens eine Presszapfen des Verbindungsadapters über mindestens eine Klebeverbindung miteinander verbunden werden.

In weiterer vorteilhafter Ausgestaltung des Verfahrens kann der Tubus des Verbindungsadapters über mehrere an seiner Außenwand angeordnete Einpressrippen in die Öffnung eingepresst und zentriert und während der Aushärtung der verpressten Silikonraupe vorfixiert werden. Dadurch kann die Messvorrichtung bis zum vollständigen Aushärten der Silikonraupe fixiert und positioniert werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Ausführungsbeispiels einer Messvorrichtung einer erfindungsgemäßen Sensoranordnung zur Erfassung einer Bewegung eines innerhalb eines ersten Gehäuses beweglich gelagerten Körpers vor dem Fügen mit einem ersten Gehäuse.
Fig. 2 zeigt eine schematische perspektivische Darstellung der Messvorrichtung aus Fig. 1 von unten.
Fig. 3 zeigt eine schematische Draufsicht auf die Messvorrichtung aus Fig. 1 und 2.
Fig. 4 zeigt eine schematische Schnittdarstellung eines Ausführungsbeispiels einer erfindungsgemäßen Sensoranordnung zur Erfassung einer Bewegung eines innerhalb eines ersten Gehäuses beweglich gelagerten Körpers.
Fig. 5 zeigt eine Darstellung eines Details V der Messvorrichtung aus Fig. 4.
Fig. 6 zeigt ein schematisches Ablaufdiagramm eines Ausführungsbeispiels eines erfindungsgemäßen Verfahrens zum Fügen der Sensoranordnung aus Fig. 4 und 5.

### Ausführungsformen der Erfindung

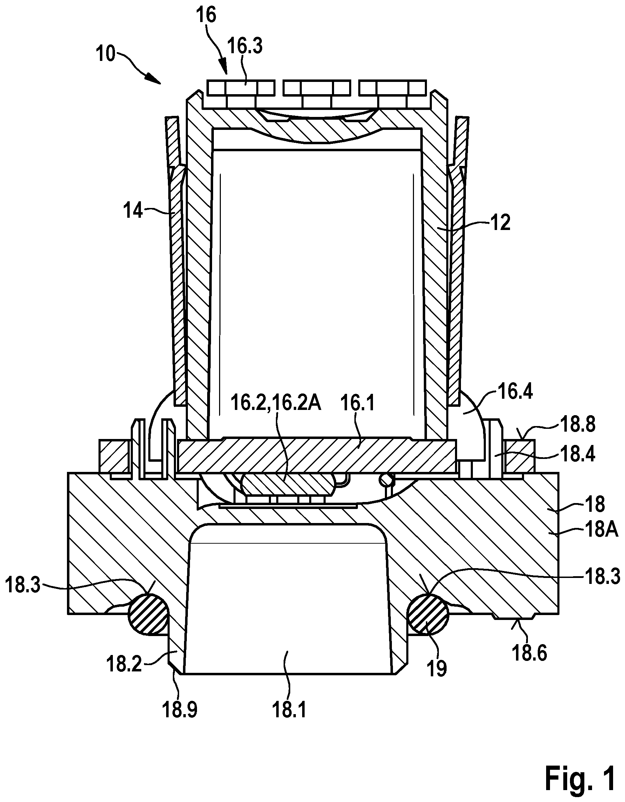

Wie aus Fig. 1 bis 5 ersichtlich ist, umfasst das dargestellte Ausführungsbeispiel einer erfindungsgemäßen Sensoranordnung 1 zur berührungslosen Erfassung einer Bewegung eines innerhalb eines ersten Gehäuses 3 beweglich gelagerten Körpers 26, einen Messwertgeber 20, welcher drehfest mit dem Körper 26 verbunden ist und sich mit dem Körper 26 mitbewegt, und eine ortsfest angeordnete Messvorrichtung 10, welche einen Messwertaufnehmer 16.2 umfasst. Der Messwertgeber 20 beeinflusst in Abhängigkeit von der Bewegung des Körpers 26 mindestens eine von dem Messwertaufnehmer 16.2 erfasste physikalischen Größe. Hierbei ist die Messvorrichtung 10 über einen Verbindungsadapter 18, welcher im dargestellten Ausführungsbeispiel als Kunststoffspritzteil 18A ausgeführt ist, mit dem ersten Gehäuse 3 verbunden. Der Verbindungsadapter 18 weist an einer dem ersten Gehäuse 3 zugewandten Seite eine umlaufende Aufnahmekontur 18.3 auf, in welche eine Silikonraupe 19 eingebracht und zwischen der Aufnahmekontur 18.3 und dem ersten Gehäuse 3 verpresst ist, wobei die verpresste Silikonraupe 19A den Verbindungsadapter 18 am ersten Gehäuse 3 fixiert und abdichtet.

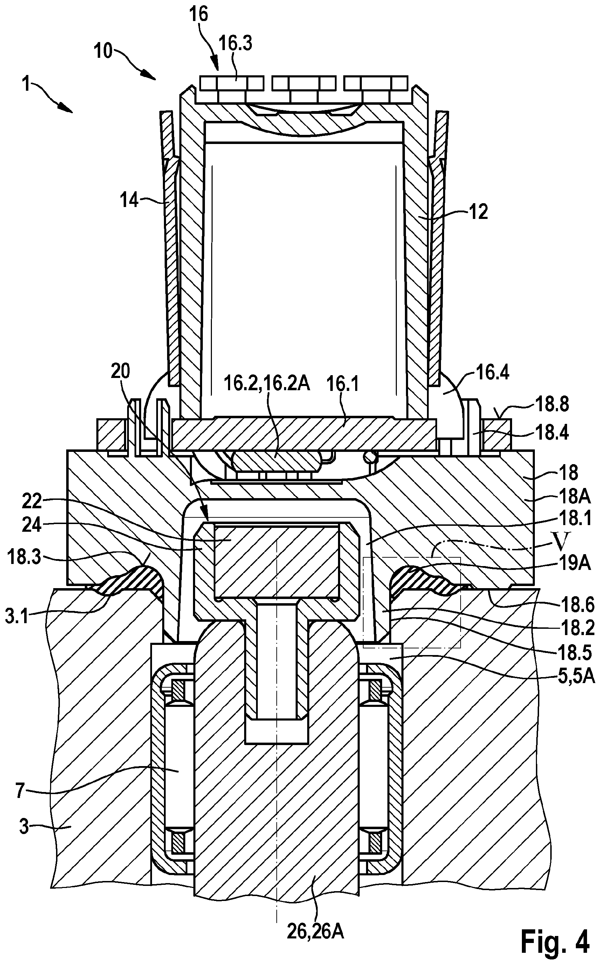

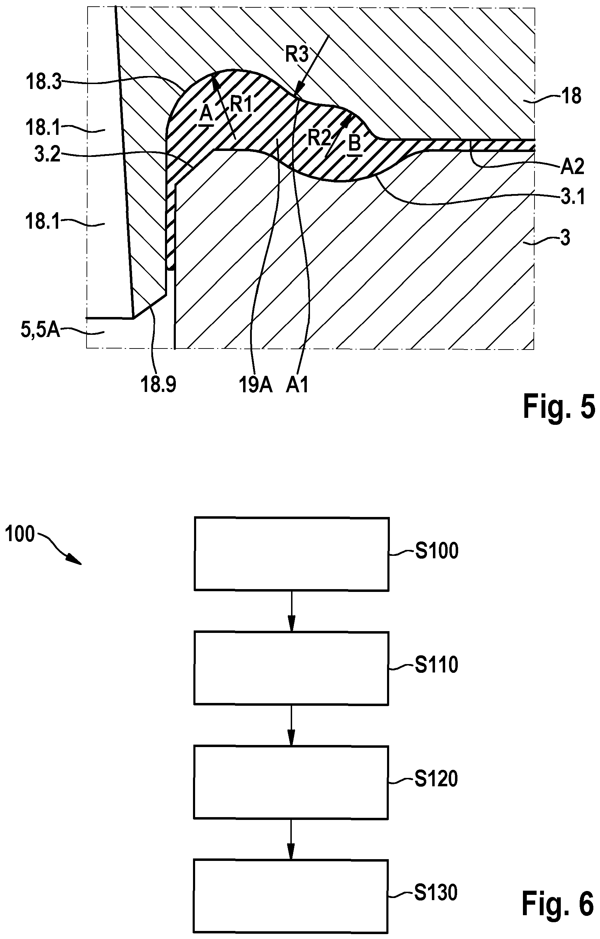

Wie aus Fig. 1 bis 5 weiter ersichtlich ist, weist der Verbindungsadapter 18 im dargestellten Ausführungsbeispiel an der dem ersten Gehäuse 3 zugewandten Seite einen Tubus 18.1 auf, welcher in eine korrespondierende Öffnung 5 im ersten Gehäuse 3 einführbar ist, in welcher der mit dem bewegten Körper 26 verbundene Messwertgeber 20 angeordnet ist. Die umlaufende Aufnahmekontur 18.3 ist rotationssymmetrisch mit einem geschwungenen offenen Querschnitt am äußeren Rand des Tubus 18.1 ausgebildet. Wie aus Fig. 4 und 5 weiter ersichtlich ist, ist der offene Querschnitt der Aufnahmekontur von einer Oberfläche des ersten Gehäuses 3 begrenzt, wobei die in der Aufnahmekontur 18.3 verpresste Silikonraupe 19A den Verbindungsadapter 18 und die Öffnung 5 im ersten Gehäuse 3 abdichtet.

Wie aus Fig. 4 weiter ersichtlich ist, wird die erfindungsgemäße Sensoranordnung 1 im dargestellten Ausführungsbeispiel in einem ESP-System verwendet, um eine momentane Drehposition und/oder Drehgeschwindigkeit einer Welle 26A eines Elektromotors zu ermitteln, welcher zum Antreiben von mindestens einem Druckerzeuger verwendet wird. Hierbei wird das erste Gehäuse 3 im dargestellten Ausführungsbeispiel durch ein Pumpengehäuse 3A des ESP-Systems gebildet, welches neben dem Elektromotor, welcher beispielsweise als drehzahlgeregelter bürstenloser EC-Motor (Electronically Commutated Motor) ausgeführt ist, mehrere nicht näher dargestellte Fluidpumpen, Federdruckspeicher und Fluidkanäle sowie Magnetventile und Drucksensoren umfasst. Daher ist der bewegte Körper 26 im dargestellten Ausführungsbeispiel als rotationsbeweglich gelagerte Welle 26A ausgeführt, an deren freiem Ende ein Permanentmagnet 22 angeordnet ist. Wie aus Fig. 4 weiter ersichtlich ist, ist die Welle 26A des Elektromotors über ein Motorlager 7 drehbeweglich in der als Motorbohrung 5A in das Pumpengehäuse 3A eingebrachten Öffnung 5 gelagert. Hierbei erfasst der Messwertaufnehmer 16.2 im dargestellten Ausführungsbeispiel mindestens eine magnetische Größe eines Magnetfelds des Permanentmagneten 22, welches von der Bewegung des Körpers 26 beeinflusst ist. Bei dem als Welle 26A ausgeführten Körper 26 ist die Beeinflussung des von dem Messwertaufnehmer 16.2 erfassten Magnetfelds auswertbar, um einen aktuellen Drehwinkel und/oder eine aktuelle Drehgeschwindigkeit der Welle 26A zu berechnen. Bei einem alternativen nicht dargestellten Ausführungsbeispiel ist der bewegte Körper 26 als translatorisch gelagerte Stange ausgeführt. Hierbei ist bei dem als Stange ausgeführten Körper 26 die Beeinflussung des von dem Messwertaufnehmer 16.2 erfassten Magnetfelds auswertbar, um eine aktuell zurückgelegte Strecke und/oder eine aktuelle Verschiebegeschwindigkeit der Stange zu berechnen.

Wie aus Fig. 4 weiter ersichtlich ist, ist der Permanentmagnet 22 zur Befestigung an der Welle 26 im dargestellten Ausführungsbeispiel in einem Haltebecher 24 aus einem unmagnetischen Werkstoff eingeklebt. Hierbei wird der Permanentmagnet 22 hochgenau auf der Welle 26A positioniert und dauerhaft befestigt. Hierzu weist die Welle 26A eine stirnseitige Bohrung zur Aufnahme eines Presszapfens des Haltebechers 24 auf, so dass der Haltebecher 24 über einen Presssitz dauerhaft an der Welle 26A befestigt werden kann. Der Becherboden dient als magnetische Isolationsstrecke zwischen dem Permanentmagneten 22 und der weichmagnetischen Welle 26A. Hierdurch wird ein Abfluss des Nutzmagnetfeldes in die Welle 26A reduziert. Bei einem alternativen nicht dargestellten Ausführungsbeispiel ist der Permanentmagnet in Form eines kunststoffgebundenen permanentmagnetischen Materials als Verlängerung an den Körper 26 angespritzt, so dass ein freies Ende des Körpers 26 den Permanentmagneten 22 ausbildet.

Wie aus Fig. 1 bis 5 weiter ersichtlich ist, sind mehrere in axialer Richtung verlaufende Einpressrippen 18.2 verteilt an einer Außenwand des Tubus 18.1 angeordnet, welche den Tubus 18.1 in der Öffnung 5 im ersten Gehäuse 3 zentrieren. Zudem wird der Tubus 18.1 über die mehreren Einpressrippen 18.2 in die Öffnung 5 bzw. Motorbohrung 5A eingepresst und vorfixiert. Um das Einführen des Tubus 18.1 in die Öffnung 5 zu erleichtern ist im dargestellten Ausführungsbeispiel am Ende der mehreren Einpressrippen 18.2 jeweils eine Einführschräge 18.9 ausgebildet. Zusätzlich ist am Rand der Öffnung 5 eine Einführfase 3.3 ausgebildet.

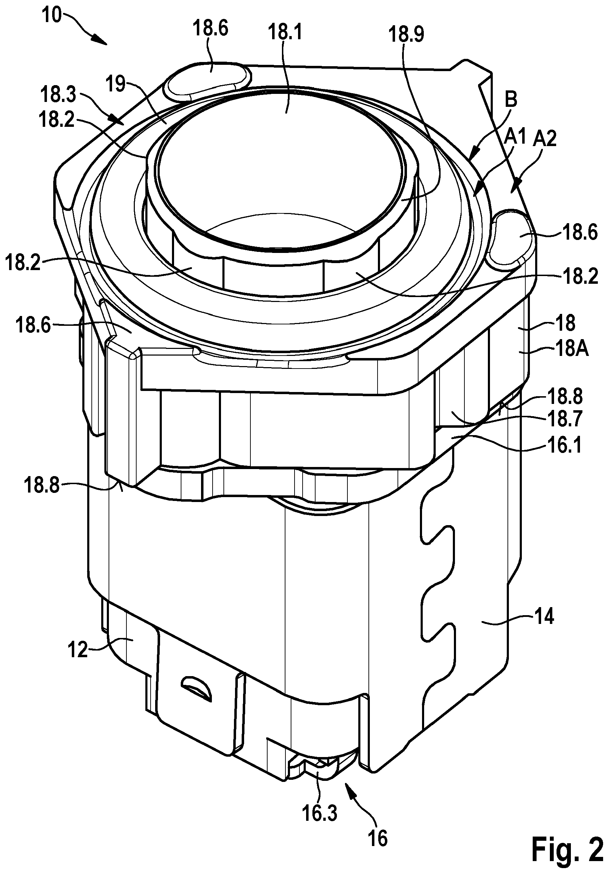

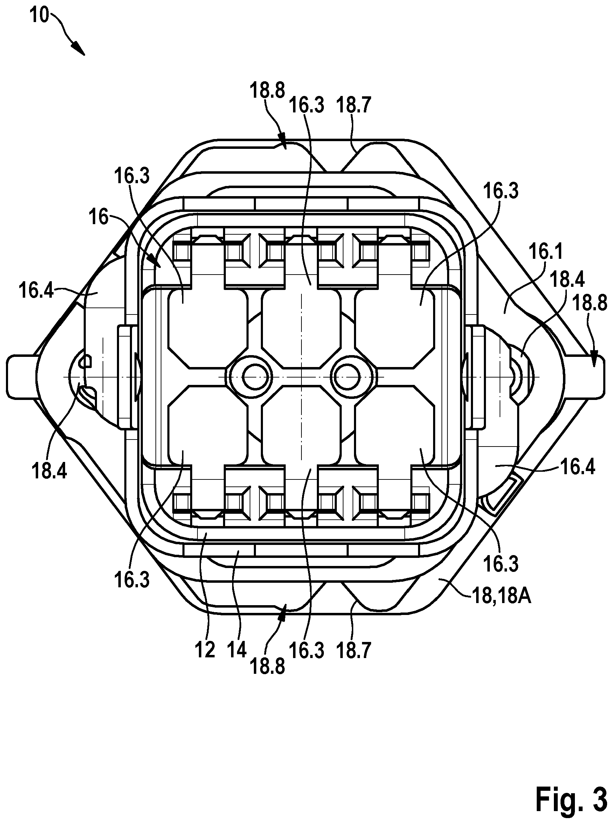

Wie insbesondere aus Fig. 2 und 3 ersichtlich ist, umfasst der Verbindungsadapter 18 im dargestellten Ausführungsbeispiel am Außenumfang zwei V-förmige Einbuchtungen 18.7 zum Ansetzen eines Positionierungs- und/oder Greifwerkzeugs. Die beiden V-förmigen Einbuchtungen 18.7 sind einander gegenüberliegend am Außenumfang des Verbindungsadapters 18 ausgebildet. Die Einbuchtungen 18.7 ermöglichen ein wiederholtes und präzises Greifen des Verbindungsadapters 18 während diverser Fertigungsschritte und ein hochgenaues rotatorisches Positionieren der Messvorrichtung 10 in der Öffnung 5 des ersten Gehäuses 3 bei der Endmontage.

Wie aus Fig. 1 bis 5 weiter ersichtlich ist, weist der Verbindungsadapter 18 an einer der Messvorrichtung 10 zugewandten Stirnseite drei Stützflächen 18.8 zum Ansetzen eines Einpresswerkzeugs auf. An der dem ersten Gehäuse 3 zugewandten Stirnseite weist der Verbindungsadapter 18 drei Auflagebereiche 18.6 auf, an welchen der Verbindungsadapter 18 an dem ersten Gehäuse 3 aufliegt. Hierbei sind die Stützflächen 18.8 und die Auflagebereiche 18.6 einander gegenüberliegend angeordnet. Selbstverständlich können auch mehr als drei Stützflächen 18.8 bzw. Auflagebereiche 18.6 vorgesehen werden.

Zudem umfasst die umlaufende Aufnahmekontur 18.3 im dargestellten Ausführungsbeispiel zur Aufnahme der Silikonraupe 19 einen Aufnahmeraum A mit einem ersten Radius R1, welcher größer als ein Querschnitt der Silikonraupe 19 ist. Des Weiteren umfasst die Aufnahmekontur 18.3 zur Aufnahme eines Teils der verpressten Silikonraupe 19A einen Verdrängungsraum B mit einem zweiten Radius R2, welcher kleiner als der erste Radius R1 des Aufnahmeraums A ist. Im dargestellten Ausführungsbeispiel entspricht der zweite Radius R2 ungefähr der Hälfte des ersten Radius R1. Wie insbesondere aus Fig. 2, 4 und 5 weiter ersichtlich ist, weist die Aufnahmekontur 18.3 zwischen dem Aufnahmeraum A und dem Verdrängungsraum B einen tangentialen und stetig abfallenden Verlauf A1 mit einer in Bezug auf den Aufnahmeraum A und den Verdrängungsraum B entgegengesetzten Krümmung auf. Zudem weist der Verlauf A1 einen dritten Radius R3 auf, welcher gleich dem ersten Radius R1 ist. Wie aus Fig. 2, 4 und 5 weiter ersichtlich ist, weist die Aufnahmekontur 18.3 an einem dem Aufnahmeraum A abgewandten Rand des Verdrängungsraums B einen Auslauf A2 auf. Der Auslauf A2 wird im dargestellten Ausführungsbeispiel durch einen Spalt ausgebildet, welcher sich durch die Auflagebereiche 18.6 am Verbindungsadapter 18 zwischen dem Verbindungsadapter 18 und dem ersten Gehäuse 3 ergibt. Dies ermöglicht einen zusätzlichen Toleranzausgleich und eine Entlüftung während des Montagevorgangs.

Vor allem die geometrische Ausgestaltung der Aufnahmekontur 18.3 über mehrere Radien R1, R2, R3 erlaubt eine saubere Anlage der verpressten Silikonraupe 19A an der Oberfläche des ersten Gehäuses 3 und in der Aufnahmekontur 18.3 des Verbindungsadapters 18. Dadurch können beispielsweise Fehlstellen und Lufteinschlüsse innerhalb der Silikondichtung mit dem Ziel einer vollständigen und gleichmäßigen Benetzung der Oberfläche des ersten Gehäuses 3 und der Aufnahmekontur 18.3 reduziert werden. Darüber hinaus ergibt sich durch die Gestaltung ein vergrößertes Volumen und somit ein vorteilhafter Toleranzausgleich der aufgebrachten Silikonmenge. Hierbei wird die Silikonraupe 19 in den tieferen Aufnahmeraum Ader Aufnahmekontur 18.3 eingebracht. Beim Einpressen des Tubus 18.1 in die Öffnung 5 des ersten Gehäuses 3 wird die eingebrachte Silikonraupe 19 über den Verlauf A1 in den flacheren Verdrängungsraum B und den Auslauf A2 der Aufnahmekontur 18.3 verdrängt und so zwischen der Aufnahmekontur 18.3 und der Oberfläche des ersten Gehäuses 3 verpresst.

Wie aus Fig. 4 und 5 weiter ersichtlich ist, weist das erste Gehäuse 3 im dargestellten Ausführungsbeispiel der Sensoranordnung 1 eine umlaufende Ringnut 3.1 auf, welche die Aufnahmekontur 18.3 am Verbindungsadapter 18 zumindest teilweise überlappt. Im dargestellten Ausführungsbeispiel überlappt die umlaufende Ringnut 3.1 im ersten Gehäuse 3 die Aufnahmekontur 18.3 am Verbindungsadapter 18 im Bereich des Verdrängungsraums B und des Auslaufs A2, um Teile des verdrängten Silikons 19A aufzunehmen. Durch die umlaufende Ringnut 3.1 ergibt sich eine Vergrößerung der benetzten Oberfläche des ersten Gehäuses 3. Wie insbesondere aus Fig. 5 weiter ersichtlich ist, weist die Ringnut 3.1 einen konkaven bzw. abgerundeten Übergang zur planen Oberfläche des ersten Gehäuse 3 auf.

Wie aus Fig. 1 bis 4 weiter ersichtlich ist, umfasst das dargestellte Ausführungsbeispiel der Messvorrichtung 10 ein zweites Gehäuse 12 und ein das zweite Gehäuse 12 umschließendes Abschirmblech 14. Hierbei ist das Abschirmblech 14 geschlossen ausgebildet und über das zweite Gehäuse 12 geschoben. Das zweite Gehäuse 12 ist im dargestellten Ausführungsbeispiel als Kunststoffgehäuse ausgebildet. Der Messwertaufnehmer 16.2 ist im dargestellten Ausführungsbeispiel als TMR-Baustein 16.2A ausgeführt, welcher auf dem TMR-Effekt (magnetoresistiver Tunneleffekt) basiert und mit dem am Ende der Welle 26A des bürstenlosen EC-Motors angeordneten Permanentmagneten 22 zusammenwirkt, um die momentane Drehposition der Welle 26A zu erfassen. Selbstverständlich können auch andere Messwertaufnehmer 16.2 eingesetzt werden, welche geeignet sind die momentane Drehposition der Welle zu erfassen. Im dargestellten Ausführungsbeispiel der Messvorrichtung 10 umfasst eine Sensorelektronik 16 neben dem Messwertaufnehmer 16.2, eine Leiterplatte 16.1, auf welcher der Messwertaufnehmer 16.2 positioniert und befestigt ist, und mehrere Stromschienen 16.3, welche in die Leiterplatte 16 eingepresst sind und durch das zweite Gehäuse 12 in Position gehalten werden. Dadurch wird das vom Messwertaufnehmer 16.2 detektierte Drehpositionssignal über die Leiterplatte 16 und die Stromschienen 16.3 zu einem nicht dargestellten Steuergerät übertragen.

Wie aus Fig. 1, 3 und 4 weiter ersichtlich ist, umfasst der Verbindungsadapter 18 mehrere Presszapfen 18.4. Hierbei ist die Leiterplatte 16.1 so auf den Verbindungsadapter 18 aufgesetzt, dass die Presszapfen 18.4 in korrespondierende Öffnungen der Leiterplatte 16.1 eingepresst sind und die Leiterplatte 16.1 mit dem Messwertaufnehmer 16.2 bezogen auf die Öffnung 5 im ersten Gehäuse 3 positionieren und zentrieren. Wie aus Fig. 4 weiter ersichtlich ist, bildet der Tubus 18.1 einen Hohlraum aus, in welchen das Ende der Welle 26A mit dem Permanentmagneten 22 hineinragt. Im dargestellten Ausführungsbeispiel ist der Messwertaufnehmer 16.2 auf einer der Welle 26A bzw. dem Permanentmagneten 22 zugewandten Seite der Leiterplatte 16.1 in einer Aussparung des Verbindungsadapters 18 angeordnet, welcher von der Leiterplatte 16.1 abgedeckt ist. Das nicht dargestellte Steuergerät kann beispielsweise über Federkontakte mit den Stromschienen 16.3 der Messvorrichtung 10 kontaktiert werden.

Wie aus Fig. 1 bis 4 weiter ersichtlich ist, ist eine Blechplatine des Abschirmblechs 14 entsprechend der Geometrie des zweiten Gehäuses 12 gebogen, wobei zur Verbesserung der elektromagnetischen Abschirmwirkung das Abschirmblech 14 rundum geschlossen ist. Zudem ist an zwei gegenüberliegenden Seiten des Abschirmblechs 14 jeweils eine Biegelasche mit einer Prägung ausgebildet, welche eine Vorspannkraft auf das zweite Gehäuse 12 ausüben. Zur exakten Positionierung des Abschirmblechs 14 im Hinblick auf den Messwertaufnehmer 16.2 weist das zweite Gehäuse 12 zwei gegenüberliegende nicht näher bezeichnete Sockel als Anschlag für das Abschirmblech 14 auf. Dadurch kann ein direkter Kontakt des Abschirmblechs 14 mit der Leiterplatte 16.1 und dadurch ein "Scheuern" des Abschirmblechs 14 auf der Leiterplatte 16.1 verhindert werden. Somit wird auch das Risiko eines Kurzschlusses oder einer Leiterbahnunterbrechung reduziert.

Wie aus Fig. 1, 3 und 4 weiter ersichtlich ist, sind das Abschirmblech 14, das zweite Gehäuse 12, die Leiterplatte 16.1 und die Presszapfen 18.4 des Verbindungsadapters 18 über mehrere Klebeverbindungen 16.4 miteinander verbunden.

Wie aus Fig. 6 weiter ersichtlich ist, stellt das erfindungsgemäße Verfahren 100 zum Fügen einer Sensoranordnung 1 in einem Schritt S100 das erste Gehäuse 3 mit der Öffnung 5 bzw. Motorbohrung 5A bereit, in welcher der Körper 26 bzw. die Welle 26A mit dem Messwertgeber 20 beweglich gelagert ist. Im Schritt S110 wird die mit dem Verbindungsadapter 18 verbundene Messvorrichtung 10 bereitgestellt. Hierbei können die Schritte S100 und S110 in der dargestellten Reihenfolge oder zeitgleich oder in umgekehrter Reihenfolge durchgeführt werden. Im Schritt S120 wird die Silikonraupe 19 in die umlaufende Aufnahmekontur 18.3 des Verbindungsadapters 18 eingebracht. Im Schritt S130 wird der Tubus 18.1 des Verbindungsadapters 18 in die Öffnung 5 des ersten Gehäuses 3 so eingeführt, dass die Silikonraupe 19A während des Einführvorgangs in der umlaufenden Aufnahmekontur 18.3 verdrängt wird und den Verbindungsadapter 18 am ersten Gehäuses 3 fixiert.

Nach einem Aushärte- bzw. Aktivierungsvorgang der verpressten Silikonraupe 19A ist die Messvorrichtung 10 am ersten Gehäuse 3 bzw. dem Pumpengehäuse 3A fixiert und die Öffnung 5 bzw. Motorbohrung 5A abgedichtet. So kann die verpresste Silikonraupe 19A beispielsweise an Luft oder in einem Ofen aushärten.

Die rotationssymmetrische Gestaltung der Aufnahmekontur 18.3 ermöglicht ein einfaches und kostengünstiges Applizieren der Silikonraupe 19, da ein nicht dargestellter Silikondispenser, welcher die Silikonraupe 19 ausgibt, stillsteht und die Messvorrichtung 10 mit dem Verbindungsadapter 18 und der Aufnahmekontur 18.3 unter dem Dispenser rotiert. Die offene Gestaltung der Aufnahmekontur 18.3 erlaubt eine leichte, kostengünstige und gleichzeitig präzise Applikation des Silikons. Außerdem wird eine vollautomatische und optische Kontrolle der aufgebrachten Silikonraupe, beispielsweise hinsichtlich Menge, Form, Fehlstellen usw. ermöglicht. Da eine korrespondierende Oberfläche des ersten Gehäuses 3 die offene Aufnahmekontur 18.3 nach unten begrenzt ergibt sich beim Fügen der Bauteile in vorteilhafter Weise eine horizontale Verdrängung des Silikons über die Oberfläche des ersten Gehäuses 3. Damit kann eine Kontamination der Öffnung 5 im ersten Gehäuses 3 und des darin angeordneten Motorlagers 7 mit Silikon vermieden werden. Die Aufbringung des Silikons auf der Messvorrichtung 10 bzw. dem Verbindungsadapter 18 und nicht auf dem ersten Gehäuse 3 verringert die Ausschusskosten bei fehlerhaft aufgetragenem Silikon. Zudem ist kein "Abstreifen bzw. Verschleppen" des Silikons durch den Tubus 18.1 am Verbindungsadapter 18 in die Öffnung 5 möglich.

Um den Tubus 18.1 des Verbindungsadapters 18 während der Aushärtung bzw. Aktivierung der verpressten Silikonraupe 19A vorzufixieren, wird der Tubus 18.1 im dargestellten Ausführungsbeispiel über die mehreren an seiner Außenwand angeordnete Einpressrippen 18.2 in die Öffnung 5 eingepresst und zentriert.

## Patentansprüche

1. Sensoranordnung (1) zur berührungslosen Erfassung einer Bewegung eines innerhalb eines ersten Gehäuses (3) beweglich gelagerten Körpers (26), mit einem Messwertgeber (20), welcher drehfest mit dem Körper (26) verbunden ist und sich mit dem Körper (26) mitbewegt, und einer ortsfest angeordneten Messvorrichtung (10), welche einen Messwertaufnehmer (16.2) umfasst, wobei der Messwertgeber (20) in Abhängigkeit von der Bewegung des Körpers (26) mindestens eine von dem Messwertaufnehmer (16.2) erfasste physikalische Größe beeinflusst, wobei die Messvorrichtung (10) über einen Verbindungsadapter (18) mit dem ersten Gehäuse (3) verbunden ist, welcher an einer dem ersten Gehäuse (3) zugewandten Seite eine umlaufende Aufnahmekontur (18.3) aufweist,
**dadurch gekennzeichnet,**
**dass** in die Aufnahmekontur (18.3) eine Silikonraupe (19, 19A) eingebracht und zwischen der Aufnahmekontur (18.3) und dem ersten Gehäuse (3) verpresst ist, wobei die verpresste Silikonraupe (19A) den Verbindungsadapter (18) am ersten Gehäuse (3) fixiert und abdichtet.

2. Sensoranordnung (1) nach Anspruch 1, **dadurch gekennzeichnet, dass** der Verbindungsadapter (18) an der dem ersten Gehäuse (3) zugewandten Seite einen Tubus (18.1) aufweist, welcher in eine korrespondierende Öffnung (5) im ersten Gehäuse (3) eingeführt ist, in welcher der mit dem bewegten Körper (26) verbundene Messwertgeber (20) angeordnet ist.

3. Sensoranordnung (1) nach Anspruch 1 oder 2, **dadurch gekennzeichnet, dass** die umlaufende Aufnahmekontur (18.3) rotationssymmetrisch mit einem geschwungenen offenen Querschnitt am äußeren Rand des Tubus (18.1) ausgebildet ist, welcher von einer Oberfläche des ersten Gehäuses (3) begrenzt ist, wobei die in der Aufnahmekontur (18.3) verpresste Silikonraupe (19A) den Verbindungsadapter (18) und die Öffnung (5) im ersten Gehäuse (3) abdichtet.

4. Sensoranordnung (1) nach einem der Ansprüche 1 bis 3, **dadurch gekennzeichnet, dass** das erste Gehäuse (3) eine umlaufende Ringnut (3.1) aufweist, welche die Aufnahmekontur (18.3) am Verbindungsadapter (18) zumindest teilweise überlappt.

5. Sensoranordnung (1) nach einem der Ansprüche 1 bis 4, **dadurch gekennzeichnet, dass** die Aufnahmekontur (18.3) zur Aufnahme der Silikonraupe (19) einen Aufnahmeraum (A) mit einem ersten Radius (R1) aufweist, welcher größer als ein Querschnitt der Silikonraupe (19) ist.

6. Sensoranordnung (1) nach einem der Ansprüche 1 bis 4, **dadurch gekennzeichnet, dass** die Aufnahmekontur (18.3) zur Aufnahme eines Teils der verpressten Silikonraupe (19A) einen Verdrängungsraum (B) mit einem zweiten Radius (R2) aufweist, welcher kleiner als der erste Radius (R1) des Aufnahmeraums (A) ist.

7. Sensoranordnung (1) nach Anspruch 5, **dadurch gekennzeichnet, dass** die Aufnahmekontur (18.3) zwischen dem Aufnahmeraum (A) und dem Verdrängungsraum (B) einen tangentialen und stetig abfallenden Verlauf (A1) mit einer in Bezug auf den Aufnahmeraum (A) und den Verdrängungsraum (B) entgegengesetzten Krümmung und einem dritten Radius (R3) aufweist.

8. Sensoranordnung (1) nach Anspruch 6, **dadurch gekennzeichnet, dass** die Aufnahmekontur (18.3) an einem dem Aufnahmeraum (A) abgewandten Rand des Verdrängungsraums (B) einen Auslauf (A2) aufweist.

9. Sensoranordnung (1) nach Anspruch 6 bis 8, **dadurch gekennzeichnet, dass** die umlaufende Ringnut (3.1) im ersten Gehäuse (3) die Aufnahmekontur (18.3) am Verbindungsadapter (18) zumindest im Bereich des Verdrängungsraums (B) überlappt.

10. Sensoranordnung (1) nach einem der Ansprüche 1 bis 9, **dadurch gekennzeichnet, dass** der Messwertgeber (20) einen Permanentmagneten (22) umfasst, und der Messwertaufnehmer (16.2) mindestens eine magnetische Größe eines Magnetfelds des Permanentmagneten (22) erfasst, welches von der Bewegung des Körpers (26) beeinflusst ist.

11. Sensoranordnung (1) nach einem der Ansprüche 2 bis 10, **dadurch gekennzeichnet, dass** mindestens eine in axialer Richtung verlaufende Einpressrippe (18.2) an einer Außenwand des Tubus (18.1) ausgebildet ist, über welche der Tubus (18.1) in die Öffnung (5) eingepresst und vorfixiert ist.

12. Sensoranordnung (1) nach Anspruch 11, **dadurch gekennzeichnet, dass** mehrere Einpressrippen (18.2) verteilt an der Außenwand des Tubus (18.1) angeordnet sind und den Tubus (18.1) in der Öffnung (5) im ersten Gehäuse (3) zentrieren.

13. Sensoranordnung (1) nach einem der Ansprüche 1 bis 12, **dadurch gekennzeichnet, dass** der Verbindungsadapter (18) am Außenumfang mindestens eine Einbuchtung (18.7) zum Ansetzen eines Positionierungs- und/oder Greifwerkzeugs aufweist.

14. Sensoranordnung (1) nach einem der Ansprüche 1 bis 13, **dadurch gekennzeichnet, dass** der Verbindungsadapter (18) an einer der Messvorrichtung (10) zugewandten Stirnseite mehrere Stützflächen (18.8) zum Ansetzen eines Einpresswerkzeugs und an der dem ersten Gehäuse (3) zugewandten Stirnseite mehrere Auflagebereiche (18.6) aufweist, an welchen der Verbindungsadapter (18) an dem ersten Gehäuse (3) aufliegt, wobei die Stützflächen (18.8) und die Auflagebereiche (18.6) einander gegenüberliegend angeordnet sind.

15. Sensoranordnung (1) nach einem der Ansprüche 1 bis 14, **dadurch gekennzeichnet, dass** ein Abschirmblech (14) über ein zweites Gehäuse (12) der Messvorrichtung (20) geschoben ist und das zweite Gehäuse (12) umschließt.

16. Sensoranordnung (1) nach einem der Ansprüche 1 bis 15, **dadurch gekennzeichnet, dass** der Messwertaufnehmer (16.2) auf einer Leiterplatte (16.1) positioniert und befestigt ist.

17. Sensoranordnung (1) nach Anspruch 16, **dadurch gekennzeichnet, dass** der Verbindungsadapter (18) an einer der Messvorrichtung (10) zugewandten Seite mindestens einen Presszapfen (18.4) aufweist, welcher in eine korrespondierende Öffnung der Leiterplatte (16.1) eingepresst ist.

18. Sensoranordnung (1) nach Anspruch 17, **dadurch gekennzeichnet, dass** mehrere Presszapfen (18.4) verteilt am Verbindungsadapter (18) ausgebildet sind, welche die Leiterplatte (16.1) mit dem Messwertaufnehmer (16.2) bezogen auf die Öffnung (5) im ersten Gehäuse (3) positionieren und zentrieren.

19. Sensoranordnung (1) nach Anspruch 18, **dadurch gekennzeichnet, dass** das Abschirmblech (14), das zweite Gehäuse (12), die Leiterplatte (16.1) und der mindestens eine Presszapfen (18.4) des Verbindungsadapters (18) über mindestens eine Klebeverbindung (16.4) miteinander verbunden sind.

20. ESP-System für ein Fahrzeug, mit einem Elektromotor zum Antreiben von mindestens einem Druckerzeuger und einer Sensoranordnung (1), wobei die Sensoranordnung (1) nach einem der Ansprüche 1 bis 19 ausgebildet ist und eine momentane Drehposition und/oder Drehgeschwindigkeit einer Welle (26A) des Elektromotors ermittelt.

21. Verfahren (100) zum Fügen einer Sensoranordnung (1) mit Verbindungsadapter (18) mit einem ersten Gehäuse (3) mit Öffnung (5) **gekennzeichnet durch** die Schritte:
bewegliche Lagerung eines Körpers (26) mit einem Messwertgeber (20) in der Öffnung (5) des ersten Gehäuses (3),
Einbringen einer Silikonraupe (19A) in eine umlaufende Aufnahmekontur (18.3) des Verbindungsadapters (18) und
Einführen eines Tubus (18.1) des Verbindungsadapters (18) der Sensoreinrichtung (1) in die Öffnung (5) des ersten Gehäuses (3),
so dass die Silikonraupe (19A) während des Einführvorgangs in der umlaufenden Aufnahmekontur (18.3) verdrängt wird und den Verbindungsadapter (18) am ersten Gehäuse (3) fixiert und die Öffnung (5) des
ersten Gehäuses (3) abdichtet.

22. Verfahren (100) nach Anspruch 21, **dadurch gekennzeichnet, dass** der Tubus (18.1) des Verbindungsadapters (18) über mehrere an seiner Außenwand angeordnete Einpressrippen (18.2) in die Öffnung (5) eingepresst und zentriert und während der Aushärtung der verpressten Silikonraupe (19A) vorfixiert wird.

## Claims

1. Sensor arrangement (1) for detecting in a contactless manner a movement of a body (26) that is movably mounted within a first housing (3), having a transducer (20) that is non-rotatably connected to the body (26) and moves simultaneously with the body (26), and a measuring apparatus (10) that is fixedly arranged and comprises a measuring element (16.2), wherein the transducer (20) in dependence upon the movement of the body (26) influences at least one physical variable that is detected by the measuring element (16.2), wherein the measuring apparatus (10) is connected to the first housing (3) by way of a connecting adapter (18) that comprises on a side that is facing the first housing (3) a circumferential receiving contour (18.3), **characterized in that** a silicone bead (19, 19A) is introduced into the receiving contour (18.3) and pressed in between the receiving contour (18.3) and the first housing (3), wherein the silicone bead (19A) that is pressed in fixes and seals the connecting adapter (18) on the first housing (3).

2. Sensor arrangement (1) according to Claim 1, **characterized in that** the connecting adaptor (18) comprises on the side that is facing the first housing (3) a tube (18.1), which is inserted into a corresponding opening (5) in the first housing (3), in which the transducer (20) that is connected to the moving body (26) is arranged.

3. Sensor arrangement (1) according to Claim 1 or 2, **characterized in that** the circumferential receiving contour (18.3) is formed in a rotational symmetrical manner with a cross-section that is curved open on the outer edge of the tube (18.1) that is defined by a surface of the first housing (3), wherein the silicone bead (19A) that is pressed in the receiving contour (18.3) seals the connecting adaptor (18) and the opening (5) in the first housing (3).

4. Sensor arrangement (1) according to one of Claims 1 to 3, **characterized in that** the first housing (3) comprises a circumferential annular groove (3.1) that overlaps the receiving contour (18.3) on the connecting adaptor (18) at least in part.

5. Sensor arrangement (1) according to one of Claims 1 to 4, **characterized in that** the receiving contour (18.3) for receiving the silicone bead (19) comprises a receiving space (A) having a first radius (R1) that is greater than a cross-section of the silicone bead (19).

6. Sensor arrangement (1) according to one of Claims 1 to 4, **characterized in that** the receiving contour (18.3) for receiving a part of the silicone bead (19A) that is pressed in comprises a displacement space (B) having a second radius (R2) that is smaller than the first radius (R1) of the receiving space (A).

7. Sensor arrangement (1) according to Claim 5, **characterized in that** the receiving contour (18.3) comprises between the receiving space (A) and the displacement space (B) a tangential and continuously downward route (A1) having a curvature that lies opposite with regard to the receiving space (A) and the displacement space (B) and comprises a third radius (R3).

8. Sensor arrangement (1) according to Claim 6, **characterized in that** the receiving contour (18.3) comprises at an edge of the displacement space (B) that is remote from the receiving space (A) an outlet (A2).

9. Sensor arrangement (1) according to Claim 6 to 8, **characterized in that** the circumferential annular groove (3.1) in the first housing (3) overlaps the receiving contour (18.3) on the connecting adapter (18) at least in the region of the displacement space (B).

10. Sensor arrangement (1) according to one of Claims 1 to 9, **characterized in that** the transducer (20) comprises a permanent magnet (22) and the measuring element (16.2) detects at least one magnetic variable of a magnetic field of the permanent magnet (22), said magnetic variable being influenced by the movement of the body (26) .

11. Sensor arrangement (1) according to one of Claims 2 to 10, **characterized in that** at least one press-in rib (18.2) that extends in the axial direction is formed on an outer wall of the tube (18.1) and by way of said press-in rib the tube (18.1) is pressed into the opening (5) and pre-fixed.

12. Sensor arrangement (1) according to Claim 11, **characterized in that** multiple press-in ribs (18.2) are arranged distributed on the outer wall of the tube (18.1) and said multiple press-in ribs center the tube (18.1) in the opening (5) in the first housing (3).

13. Sensor arrangement (1) according to one of Claims 1 to 12, **characterized in that** the connecting adaptor (18) comprises on the outer periphery at least one recess (18.7) for engaging a positioning tool and/or gripping tool.

14. Sensor arrangement (1) according to one of Claims 1 to 13, **characterized in that** the connecting adapter (18) comprises on an end side that is facing the measuring apparatus (10) multiple support surfaces (18.8) for engaging a press-in tool and on the end side that is facing the first housing (3) multiple contact areas (18.6) against which the connecting adapter (18) is lying on the first housing (3), wherein the support surfaces (18.8) and the contact areas (18.6) are arranged lying opposite one another.

15. Sensor arrangement (1) according to one of Claims 1 to 14, **characterized in that** a metal shielding plate (14) is pushed over a second housing (12) of the measuring apparatus (20) and encompasses the second housing (12).

16. Sensor arrangement (1) according to one of Claims 1 to 15, **characterized in that** the measuring element (16.2) is positioned and fastened on a circuit board (16.1).

17. Sensor arrangement (1) according to Claim 16, **characterized in that** the connecting adapter (18) comprises on a side that is facing the measuring apparatus (10) at least one press-in pin (18.4) that is pressed into a corresponding opening of the circuit board (16.1).

18. Sensor arrangement (1) according to Claim 17, **characterized in that** multiple press-in pins (18.4) are formed distributed on the connecting adapter (18) and said multiple press-in pins position and center the circuit board (16.1) having the measuring element (16.2) with regard to the opening (5) in the first housing (3).

19. Sensor arrangement (1) according to Claim 18, **characterized in that** the metal shielding plate (14), the second housing (12), the circuit board (16.1) and the at least one press-in pin (18.4) of the connecting adapter (18) are connected to one another by way of at least one adhesive connection (16.4).

20. ESP system for a vehicle, having an electric motor for driving at least one pressure generator and a sensor arrangement (1), wherein the sensor arrangement (1) is formed according to one of Claims 1 to 19 and determines a prevailing rotational position and/or rotational speed of a shaft (26A) of the electric motor.

21. Method (100) for joining a sensor arrangement (1) with connecting adapter (18) having a first housing (3) with opening (5), **characterized by** the steps:
movably mounting a body (26) having a transducer (20) in the opening (5) of the first housing (3);
introducing a silicon bead (19A) into a circumferential receiving contour (18.3) of the connecting adapter (18), and
inserting a tube (18.1) of the connecting adapter (18) of the sensor device (1) into the opening (5) of the first housing (3), so that the silicon bead (19A) is displaced in the circumferential receiving contour (18.3) during the insertion procedure and fixes the connecting adapter (18) on the first housing (3) and seals the opening (5) of the first housing (3).

22. Method (100) according to Claim 21, **characterized in that** the tube (18.1) of the connecting adaptor (18) is pressed by way of multiple press-in ribs (18.2) that are arranged on its outer wall into the opening (5) and centered and pre-fixed during the hardening procedure of the silicone bead (19A) that is pressed in.

## Revendications

1. Ensemble capteur (1) servant à la détection sans contact d'un mouvement d'un corps (26) monté mobile à l'intérieur d'un premier boîtier (3), comprenant un transducteur de valeurs de mesure (20), lequel est relié de manière solidaire en rotation au corps (26) et se déplace conjointement avec le corps (26), et un dispositif de mesure (10) disposé de manière fixe, lequel comprend un capteur de valeurs de mesure (16.2), le transducteur de valeurs de mesure (20) influençant au moins une grandeur physique détectée par le capteur de valeurs de mesure (16.2) en fonction du mouvement du corps (26), le dispositif de mesure (10) étant relié au premier boîtier (3) par le biais d'un adaptateur de liaison (18), lequel adaptateur présente un contour de réception périphérique (18.3) sur un côté tourné vers le premier boîtier (3),
**caractérisé en ce**
**qu'**un bourrelet de silicone (19, 19A) est introduit dans le contour de réception (18.3) et est comprimé entre le contour de réception (18.3) et le premier boîtier (3), le bourrelet de silicone (19A) comprimé fixant et rendant étanche l'adaptateur de liaison (18) sur le premier boîtier (3).

2. Ensemble capteur (1) selon la revendication 1, **caractérisé en ce que** l'adaptateur de liaison (18) présente, sur le côté tourné vers le premier boîtier (3), un tube (18.1), lequel est inséré dans une ouverture correspondante (5) dans le premier boîtier (3), ouverture dans laquelle est disposé le transducteur de valeurs de mesure (20) relié au corps déplacé (26).

3. Ensemble capteur (1) selon la revendication 1 ou 2, **caractérisé en ce que** le contour de réception périphérique (18.3) est formé suivant une symétrie de révolution avec une section transversale ouverte incurvée au niveau du bord extérieur du tube (18.1), lequel est limité par une surface du premier boîtier (3), le bourrelet de silicone (19A) comprimé dans le contour de réception (18.3) rendant étanche l'adaptateur de liaison (18) et l'ouverture (5) dans le premier boîtier (3).

4. Ensemble capteur (1) selon l'une des revendications 1 à 3, **caractérisé en ce que** le premier boîtier (3) présente une rainure annulaire périphérique (3.1), laquelle chevauche au moins partiellement le contour de réception (18.3) sur l'adaptateur de liaison (18).

5. Ensemble capteur (1) selon l'une des revendications 1 à 4, **caractérisé en ce que** le contour de réception (18.3) présente, pour la réception du bourrelet de silicone (19), un espace de réception (A) doté d'un premier rayon (R1), lequel est plus grand qu'une section transversale du bourrelet de silicone (19).

6. Ensemble capteur (1) selon l'une des revendications 1 à 4, **caractérisé en ce que** le contour de réception (18.3) présente, pour la réception d'une partie du bourrelet de silicone comprimé (19A), un espace de refoulement (B) doté d'un deuxième rayon (R2), lequel est plus petit que le premier rayon (R1) de l'espace de réception (A).

7. Ensemble capteur (1) selon la revendication 5, **caractérisé en ce que** le contour de réception (18.3) présente, entre l'espace de réception (A) et le volume de refoulement (B), un profil (A1) tangentiel et descendant de manière continue, lequel profil présente une courbure opposée par rapport à l'espace de réception (A) et à l'espace de refoulement (B) et un troisième rayon (R3).

8. Ensemble capteur (1) selon la revendication 6, **caractérisé en ce que** le contour de réception (18.3) présente une sortie (A2) au niveau d'un bord de l'espace de refoulement (B) éloigné de l'espace de réception (A).

9. Ensemble capteur (1) selon les revendications 6 à 8, **caractérisé en ce que** la rainure annulaire périphérique (3.1) dans le premier boîtier (3) chevauche le contour de réception (18.3) sur l'adaptateur de liaison (18) au moins dans la région de l'espace de refoulement (B).

10. Ensemble capteur (1) selon l'une des revendications 1 à 9, **caractérisé en ce que** le transducteur de valeurs de mesure (20) comprend un aimant permanent (22), et le capteur de valeur de mesure (16.2) détecte au moins une grandeur magnétique et un champ magnétique de l'aimant permanent (22), lequel est influencé par le mouvement du corps (26).

11. Ensemble capteur (1) selon l'une des revendications 2 à 10, **caractérisé en ce qu'**au moins une nervure d'enfoncement (18.2) s'étendant dans la direction axiale est formée sur une paroi extérieure du tube (18.1), nervure par le biais de laquelle le tube (18.1) est enfoncé et préfixé dans l'ouverture (5).

12. Ensemble capteur (1) selon la revendication 11, **caractérisé en ce que** plusieurs nervures d'enfoncement (18.2) sont disposées de manière répartie sur la paroi extérieure du tube (18.1) et centrent le tube (18.1) dans l'ouverture (5) dans le premier boîtier (3).

13. Ensemble capteur (1) selon l'une des revendications 1 à 12, **caractérisé en ce que** l'adaptateur de liaison (18) présente sur la périphérie extérieure au moins un renfoncement (18.7) pour l'application d'un outil de positionnement et/ou de préhension.

14. Ensemble capteur (1) selon l'une des revendications 1 à 13, **caractérisé en ce que** l'adaptateur de liaison (18) présente, sur un côté frontal tourné vers le dispositif de mesure (10), plusieurs surfaces de support (18.8) pour l'application d'un outil d'enfoncement et, sur le côté frontal tourné vers le premier boîtier (3), plusieurs régions d'appui (18.6) sur lesquelles repose l'adaptateur de liaison (18) sur le premier boîtier (3), les surfaces de support (18.8) et les régions d'appui (18.6) étant disposées de manière opposée les unes aux autres.

15. Ensemble capteur (1) selon l'une des revendications 1 à 14, **caractérisé en ce qu'**une tôle de protection (14) est poussée sur un deuxième boîtier (12) du dispositif de mesure (20) et entoure le deuxième boîtier (12).

16. Ensemble capteur (1) selon l'une des revendications 1 à 15, **caractérisé en ce que** le capteur de valeurs de mesure (16.2) est positionné et fixé sur une carte de circuits imprimés (16.1).

17. Ensemble capteur (1) selon la revendication 16, **caractérisé en ce que** l'adaptateur de liaison (18) présente, sur un côté tourné vers le dispositif de mesure (10), au moins un tenon d'enfoncement (18.4), lequel est enfoncé dans une ouverture correspondante de la carte de circuits imprimés (16.1).

18. Ensemble capteur (1) selon la revendication 17, **caractérisé en ce que** plusieurs tenons d'enfoncement (18.4) sont formés de manière répartie sur l'adaptateur de liaison (18), lesquels positionnent et centrent la carte de circuits imprimés (16.1) dotée du capteur de valeur de mesure (16.2) par rapport à l'ouverture (5) dans le premier boîtier (3).

19. Ensemble capteur (1) selon la revendication 18, **caractérisé en ce que** la tôle de protection (14), le deuxième boîtier (12), la carte de circuits imprimés (16.1) et l'au moins un tenon d'enfoncement (18.4) de l'adaptateur de liaison (18) sont reliés les uns aux autres par le biais d'au moins une liaison adhésive (16.4).

20. Système ESP pour un véhicule, comprenant un moteur électrique servant à l'entraînement d'au moins un générateur de pression et un ensemble capteur (1), l'ensemble capteur (1) étant formé selon l'une des revendications 1 à 19 et déterminant une position de rotation et/ou une vitesse de rotation instantanée(s) d'un arbre (26A) du moteur électrique.

21. Procédé (100) d'assemblage d'un ensemble capteur (1) comprenant un adaptateur de liaison (18) doté d'un premier boîtier (3) présentant une ouverture (5), **caractérisé par** les étapes suivantes :
montage mobile d'un corps (26) comprenant un transducteur de valeurs de mesure (20) dans l'ouverture (5) du premier boîtier (3),
introduction d'un bourrelet de silicone (19A) dans un contour de réception périphérique (18.3) de l'adaptateur de liaison (18) et
insertion d'un tube (18.1) de l'adaptateur de liaison (18) du dispositif capteur (1) dans l'ouverture (5) du premier boîtier (3), de sorte que le bourrelet de silicone (19A) soit refoulé dans le contour de réception périphérique (18.3) pendant l'opération d'insertion et fixe l'adaptateur de liaison (18) sur le premier boîtier (3) et rende étanche l'ouverture (5) du premier boîtier (3) .

22. Procédé (100) selon la revendication 21, **caractérisé en ce que** le tube (18.1) de l'adaptateur de liaison (18) est enfoncé et centré dans l'ouverture (5) par le biais de plusieurs nervures d'enfoncement (18.2) disposées sur sa paroi extérieure et préfixé pendant le durcissement du bourrelet de silicone (19A) comprimé.
